# EUROPÄISCHE PATENTSCHRIFT

(11) **EP 3 922 486 B1**
(45) Veröffentlichungstag und Bekanntmachung des Hinweises auf die Patenterteilung: **02.08.2023**
(21) Anmeldenummer: 20212113.3
(22) Anmeldetag: 07.12.2020
(51) Int. Cl.: B60C 23/04, B60C 23/06, B60C 11/24, B60C 19/00

(54) **FAHRZEUGREIFEN**
VEHICLE TYRES
PNEUS DE VÉHICULE

(30) Priorität: 08.06.2020 DE 102020207120
(43) Veröffentlichungstag der Anmeldung: 15.12.2021
(73) Patentinhaber: Continental Reifen Deutschland GmbH, 30165 Hannover (DE)
(72) Erfinder: Lehmann, Joerg, 30419 Hannover (DE)
(74) Vertreter: Continental Corporation

(56) Entgegenhaltungen:
- EP-A1- 1 097 049
- EP-A1- 2 085 253
- EP-A1- 3 318 425
- EP-A1- 3 628 513
- DE-A1-102012 212 934
- DE-A1-102016 203 658
- US-B1- 7 472 587

## Beschreibung

Die Erfindung betrifft einen Fahrzeugreifen.

Es ist bekannt, bei Fahrzeugreifen eine Reifendrucküberwachung einzusetzen, um einen Druckverlust zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile besitzen. Einer der Nachteile besteht insbesondere darin, dass es schwierig ist entsprechende Sensoren im Laufstreifen anzuordnen.

Außerdem ist es bislang mit den herkömmlichen Systemen nicht möglich, einen unregelmäßigen Profilabrieb zu detektieren.

Die EP 3 318 425 A1 offenbart einen bekannten Fahrzeugreifen mit einem Sensor zur Bestimmung von Materialverformungen.

Der Erfindung lag die Aufgabe zugrunde, einen verbesserten Fahrzeugreifen bereitzustellen.

Gelöst wird die Aufgabe durch den Oberbegriff und die kennzeichnenden Merkmale von Anspruch 1 dadurch, dass
an einem Reifenbauteil unterhalb des Laufstreifens mindestens ein Sensor zur Bestimmung von Materialverformungen angeordnet ist, wobei der Sensor mindestens zwei Materiallagen umfasst, wobei die untere und obere Materiallage jeweils einen Verformungsmessstreifen zur Messung von Materialverformungen am Laufstreifen umfassen, wobei mit dem Sensor und über die Messung von Materialverformungen ein unregelmäßiger Profilabrieb am Laufstreifen detektiert wird.

Ein Vorteil der Erfindung ist insbesondere darin zu sehen, dass mit dem neuen Sensor ein unregelmäßiger Profilabrieb am Laufstreifen des Fahrzeugreifens auf einfache Weise und automatisiert ermittelt werden kann. Ein entsprechender Sensor kann sowohl auf der Reifeninnenseite, als auch zwischen verschiedenen Reifenbauteilen integriert sein.

Die Verformungsmessstreifen reagieren auf Materialverformungen des Laufstreifens.

Bei einem unregelmäßigen Profilabrieb wird ein Bereich des Laufstreifens mehr abgerieben, als der restliche Bereich des Laufstreifens. Durch diesen unregelmäßigen Abrieb senkt sich ebenfalls auf einer Seite der Laufstreifen ab. Der Verformungsmessstreifen kann diese Absenkung detektieren und ein entsprechendes Signal ausgeben.

Die Signalauswertung würde dann beispielsweise das Ergebnis liefern, dass der Fahrzeugreifen einen Mittenabrieb aufweist und dieser daher in der nächsten Zeit ersetzt werden sollte.

In einer vorteilhaften Weiterbildung der Erfindung ist vorgesehen, dass der Verformungsmessstreifen der unteren und oberen Materiallage ein leitfähiges Gummimaterial umfassen,
wobei das leitfähige Gummimaterial eine hohe Abhängigkeit der elektrischen Leitfähigkeit von der Materialverformung aufweist.

Bei einer Längenänderung des leitfähigen Gummimaterials verändert sich ebenfalls der elektrische Widerstand des Messstreifens. Die Änderung des elektrischen Widerstandes ist ein Maß für die Längenänderung.

In einer weiteren vorteilhaften Weiterbildung der Erfindung ist vorgesehen, dass die mittlere Materiallage des Sensors aus einem um mindestens 20 % härteren Material besteht als die obere und untere Materiallage des Sensors.

Dadurch besitzt der Verformungsmessstreifen eine verbesserte Biegecharakteristik, wodurch Verformungen genauer detektiert werden können.

In einer weiteren vorteilhaften Weiterbildung der Erfindung ist vorgesehen, dass die mittlere Materiallage des Sensors aus einem Kunststoffmaterial besteht.

Die Härte des Kunststoffmaterials sollte dabei so gewählt werden, dass die Materialhärte größer ist, als die des Verformungsmessstreifens.

In einer weiteren vorteilhaften Weiterbildung der Erfindung ist vorgesehen, dass der Sensor auf der Reifeninnenseite angeordnet ist.

Dadurch lässt sich der Sensor auf einfache Weise nach der Reifenherstellung auf der Reifeninnenseite anordnen.

In einer weiteren vorteilhaften Weiterbildung der Erfindung ist vorgesehen, dass der Sensor sich auf der Reifeninnenseite von der einen Reifenschulter bis zur gegenüberliegenden Reifenschulter erstreckt.

Dadurch wird ein unregelmäßiger Profilabrieb über die gesamte Laufstreifenbreite überwacht.

In einer weiteren vorteilhaften Weiterbildung der Erfindung ist vorgesehen, dass auf der Reifeninnenseite drei Sensoren angeordnet sind, wobei zwei äußere Sensoren jeweils den Profilabrieb im Bereich der Reifenschultern des Laufstreifens und ein mittlerer Sensor den Profilabrieb im Bereich der Reifenmitte des Laufstreifens messen.

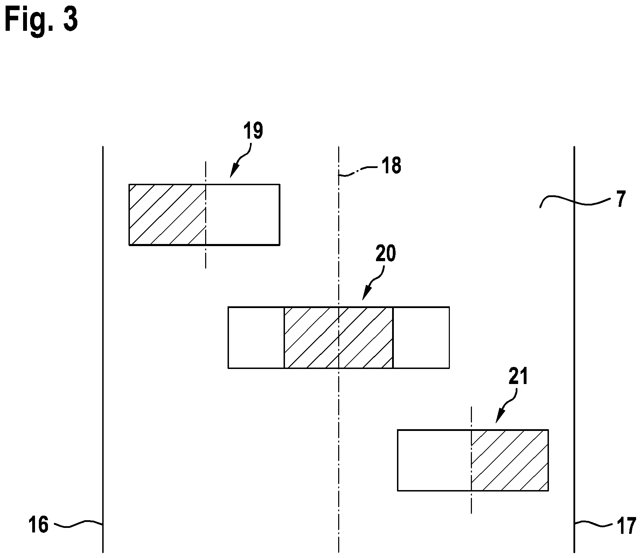

Ein entsprechendes Ausführungsbeispiel ist in der Figur 3 dargestellt. Mit den drei unterschiedlichen Sensoren lässt sich die Position eines unregelmäßigen Profilabriebes mit einer hohen Genauigkeit bestimmen.

In einer weiteren vorteilhaften Weiterbildung der Erfindung ist vorgesehen, dass die drei Sensoren auf der Reifeninnenseite zur Umfangsrichtung des Fahrzeugreifens versetzt zueinander angeordnet sind.

Dadurch wird ein unregelmäßiger Profilabrieb nicht nur in einer Ebene des Laufstreifens überwacht.

In einer weiteren vorteilhaften Weiterbildung der Erfindung ist vorgesehen, dass die Sensoren mit einem auf der Reifeninnenseite angeordneten Reifenmodul zur Erfassung von Reifeneigenschaften verbunden sind.

Mit der im Reifenmodul angeordneten Sende- und Empfangseinheit können die Messdaten einfach zu einer zentralen Empfangseinheit außerhalb des Fahrzeugreifens übermittelt werden.

In einer weiteren vorteilhaften Weiterbildung der Erfindung ist vorgesehen, dass die Auswertung der Messdaten mit einer Rechnereinheit außerhalb des Fahrzeugreifens erfolgt, wobei über Erfahrungswerte bestimmt wird, ob der Fahrzeugreifen einen unregelmäßigen Mittenabrieb oder einen unregelmäßigen Schulterabrieb aufweist.

Die Rechnereinheit könnte z. B. unterschiedliche Informationen zum Fahrzeugreifen erfassen. Zu diesen Informationen zählen beispielsweise die Position des Fahrzeugreifens am Fahrzeug. Nutzfahrzeugreifen, die auf der Antriebsachse montiert sind, weisen nach einer bestimmten Zeit in der Regel einen Mittenabrieb am Laufstreifen auf.

Diese Erfahrungswerte können genutzt werden, um dem Fahrer des Fahrzeuges eine entsprechende Fehlermeldung zu übermitteln.

Anhand eines Ausführungsbeispiels wird die Erfindung im Folgenden näher beschrieben.

Es zeigt:
- Fig. 1:: Einen Fahrzeugreifen in einer Radialschnittansicht.
- Fig. 2:: Einen Fahrzeugreifen mit einem unregelmäßigen Profilabrieb.
- Fig. 3:: Eine Aufsicht auf die Reifeninnenseite mit drei Sensoren.

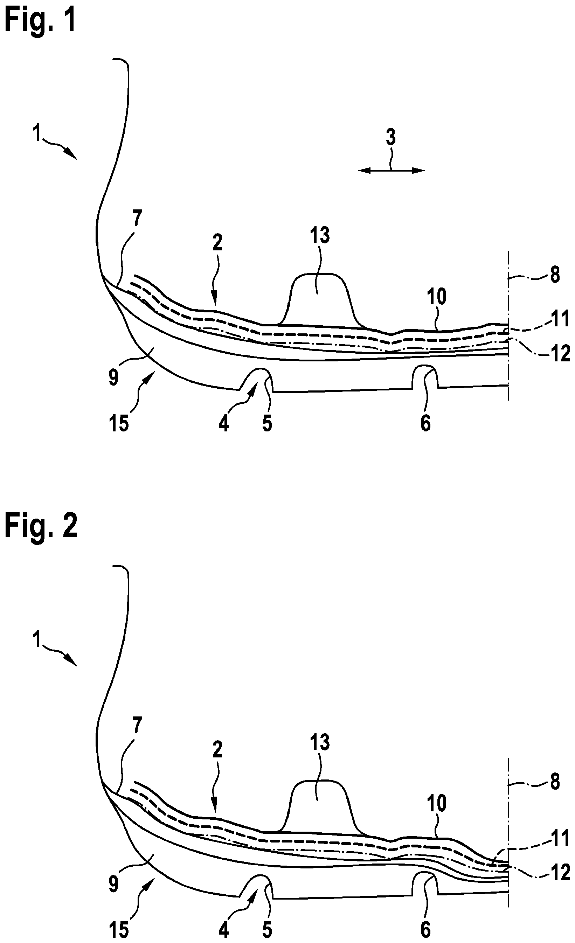

Die Figur 1 zeigt schematisch einen Fahrzeugreifen 1 in einer Radialschnittansicht.

Der Fahrzeugreifen umfasst insbesondere einen Laufstreifen 9, bei dem ein unregelmäßiger Profilabrieb überwacht werden soll. Im Laufstreifen 9 sind zwei Umfangsrillen 5 und 6 dargestellt, in denen eine Profiltiefe 4 gemessen werden kann. Die Profiltiefe 4 ist im Allgemeinen bei einem Neureifen gleich groß.

Auf der Reifeninnenseite 7 ist ein Sensor 2 angeordnet, mit dem der unregelmäßige Profilabrieb überwacht wird.

Der Sensor umfasst drei Materiallagen 10, 11 und 12. Die obere Materiallage 10 und die untere Materiallage 12 umfassen jeweils einen Verformungsmessstreifen, mit denen Materialverformungen am Fahrzeugreifen gemessen werden. Zwischen diesen beiden Materiallagen ist die mittlere Materiallage 11 angeordnet, die insbesondere dazu dient, die obere von der unteren Materiallage zu isolieren.

Die obere und untere Materiallage 10 und 12 besteht vorzugsausweise aus einem leitfähigen Gummimaterial, welches bei einer Längenänderung seinen elektrischen Widerstand verändert.

Der Sensor 2 steht mit einem Reifenmodul 13 in Verbindung, indem u.a. ein Sende- und Empfangseinheit angeordnet ist. Der Sensor 2 reicht von der einen Reifenschulter 15 bis zur nicht dargestellten gegenüberliegenden Reifenschulter. In der Figur ist schematisch nur eine Hälfte des Fahrzeugreifens 1 dargestellt, wobei mit der Mittellinie 8 die Reifenmitte angezeigt wird. Der Fahrzeugreifen ist im Wesentlichen achsensymmetrisch zur Reifenmitte 8 ausgebildet.

Die Figur 2 zeigt den Fahrzeugreifen 1, der einen unregelmäßigen Profilabrieb aufweist. Beim Laufstreifen 9 ist der Profilabrieb im mittleren Bereich des Laufstreifens größer als im Bereich der Reifenschulter. Bei einem solchen Profilabrieb spricht man im Allgemeinen von einem so genannten Mittenabrieb.

Durch den unregelmäßigen Abrieb des Laufstreifens 9 wird ebenfalls der Sensor 2 mit den drei Materiallagen entsprechend verformt. Im Bereich des unregelmäßigen Abriebes werden die drei Materiallagen 11, 10 und 12 nach unten gebogen.

Dabei wird die obere Materiallage 10 mehr verformt, als die untere Materiallage 12. Dieser Unterschied lässt sich beispielsweise durch eine Messung des elektrischen Widerstandes detektieren.

Die Messelektronik des Sensors 2 ist mit dem Reifenmodul 13 verbunden, die entsprechende Messsignale an eine zentrale Rechnereinheit außerhalb des Fahrzeugreifens weiterleitet.

Die Figur 3 zeigt eine Aufsicht auf eine Reifeninnenseite 7 mit drei Sensoren 19, 20 und 21, die auf die Reifeninnenseite aufgeklebt sind.

Die Linie 18 zeigt schematisch die Mitte des Laufstreifens. Alle drei Sensoren sind in Umfangsrichtung des Fahrzeugreifens versetzt zueinander angeordnet.

Mit den beiden äußeren Sensoren 19 und 21 wird ein unregelmäßiger Profilabrieb im Bereich der Reifenschultern überwacht.

Der mittlere Sensor 20 überwacht hingegen einen unregelmäßigen Profilabrieb im mittleren Bereich des Laufstreifens. Die schraffierten Bereiche der Sensoren zeigen die Bereiche an, in denen im Normalfall ein unregelmäßiger Profilabrieb festgestellt wird. In diesen Bereichen können sich die Sensoren nach unten biegen und dadurch einen unregelmäßigen Profilabrieb detektieren.

### Bezugszeichenliste

- 1: Fahrzeugreifen
- 2: Sensor
- 3: Axiale Richtung des Fahrzeugreifens
- 4: Profiltiefe bei einem neuen Fahrzeugreifen
- 5: Umfangsrille in der Reifenschulter
- 6: Umfangsrille im mittleren Bereich des Laufstreifens
- 7: Reifeninnenseite
- 8: Reifenmitte
- 9: Laufstreifen
- 10: Obere Materiallage des Sensors
- 11: Mittlere Materiallage des Sensors
- 12: Untere Materiallage des Sensors
- 13: Reifenmodul
- 14: Unregelmäßiger Mittenabrieb
- 15: Linke Reifenschulter
- 16: Linke Seite des Laufstreifens
- 17: Rechte Seite des Laufstreifens
- 18: Mitte des Laufstreifens
- 19: Linker Sensor
- 20: Mittlerer Sensor
- 21: Rechter Sensor

## Patentansprüche

1. Fahrzeugreifen (1) mit einem Laufstreifen (19) mit Profilblöcken, einer Karkasslage, einem Reifengürtel, einer Reifeninnenseite (7) und Seitenwänden, wobei im Fahrzeugreifen ein Reifensensor (2) zur Messung von Reifeneigenschaften angeordnet ist,
wobei an einem Reifenbauteil (7) unterhalb des Laufstreifens (9) mindestens ein Sensor (2) zur Bestimmung von Materialverformungen angeordnet ist,
**dadurch gekennzeichnet, dass**
der Sensor (2) mindestens zwei Materiallagen (10,12) umfasst,
wobei die untere und obere Materiallage (10,12) jeweils einen Verformungsmessstreifen zur Messung von Materialverformungen am Laufstreifen (9) umfassen,
wobei mit dem Sensor (2) und über die Messung von Materialverformungen ein unregelmäßiger Profilabrieb am Laufstreifen (9) detektiert wird.

2. Fahrzeugreifen nach dem , vorhergehenden Anspruch, **dadurch gekennzeichnet, dass**
der Verformungsmessstreifen der unteren und oberen Materiallage (10,12) ein leitfähiges Gummimaterial umfassen,
wobei das leitfähige Gummimaterial eine hohe Abhängigkeit der elektrischen Leitfähigkeit von der Materialverformung aufweist.

3. Fahrzeugreifen nach einem der vorhergehenden Ansprüche,
**dadurch gekennzeichnet, dass**
zwischen den oberen und unteren Materiallagen (10, 11) eine mittlere Materiallage 11 angeordnet ist, wobei die mittlere Materiallage (11) des Sensors aus einem um mindestens 20 % härteren Material besteht als die obere und untere Materiallage (10,12) des Sensors (2).

4. Fahrzeugreifen nach Anspruch 3,
**dadurch gekennzeichnet, dass**
die mittlere Materialage (11) des Sensors (2) aus einem Kunststoffmaterial besteht.

5. Fahrzeugreifen nach einem der vorhergehenden Ansprüche,
**dadurch gekennzeichnet, dass**
der Sensor (2) auf der Reifeninnenseite (7) angeordnet ist.

6. Fahrzeugreifen nach einem der vorhergehenden Ansprüche,
**dadurch gekennzeichnet, dass**
der Sensor (2) sich auf der Reifeninnenseite (7) von der einen Reifenschulter bis zur gegenüberliegenden Reifenschulter erstreckt.

7. Fahrzeugreifen nach einem der vorhergehenden Ansprüche,
**dadurch gekennzeichnet, dass**
auf der Reifeninnenseite (7) drei Sensoren (19,20,21) angeordnet sind,
wobei zwei äußere Sensoren (19,20) jeweils den Profilabrieb im Bereich der Reifenschultern des Laufstreifens (9) und ein mittlerer Sensor (20) den Profilabrieb im Bereich der Reifenmitte des Laufstreifens (9) messen.

8. Fahrzeugreifen nach Anspruch 7,
**dadurch gekennzeichnet, dass**
die drei Sensoren (19,20,21) auf der Reifeninnenseite (7) zur Umfangsrichtung des Fahrzeugreifens versetzt zueinander angeordnet sind.

9. Fahrzeugreifen nach Anspruch 7 und/oder 8,
**dadurch gekennzeichnet, dass**
die Sensoren (2,19,20,21) mit einem auf der Reifeninnenseite (7) angeordneten Reifenmodul (13) zur Erfassung von Reifeneigenschaften verbunden sind.

## Claims

1. Vehicle tyre (1) having a tread (19) with profile blocks, a carcass ply, a tyre belt, a tyre inner side (7) and sidewalls,
wherein a tyre sensor (2) for measuring tyre properties is arranged in the vehicle tyre,
wherein at least one sensor (2) for determining material deformations is arranged on a tyre component (7) below the tread (9),
**characterized in that**
the sensor (2) comprises at least two material layers (10, 12),
wherein the lower and the upper material layer (10, 12) each comprise a deformation-measuring strip for measuring material deformations at the tread (9), wherein irregular profile wear at the tread (9) is detected by the sensor (2) and by way of the measuring of material deformations.

2. Vehicle tyre according to the preceding claim,
**characterized in that**
the deformation-measuring strip of the lower and of the upper material layer (10, 12) comprises a conductive rubber material,
wherein the electrical conductivity of the conductive rubber material is highly dependent on the material deformation.

3. Vehicle tyre according to one of the preceding claims,
**characterized in that**
a middle material layer 11 is arranged between the upper and the lower material layer (10, 11), wherein the middle material layer (11) of the sensor consists of a material that is harder by at least 20% than the upper and the lower material layer (10, 12) of the sensor (2).

4. Vehicle tyre according to Claim 3,
**characterized in that**
the middle material layer (11) of the sensor (2) consists of a plastics material.

5. Vehicle tyre according to one of the preceding claims,
**characterized in that**
the sensor (2) is arranged on the tyre inner side (7).

6. Vehicle tyre according to one of the preceding claims,
**characterized in that** the sensor (2) extends on the tyre inner side (7) from one tyre shoulder to the opposite tyre shoulder.

7. Vehicle tyre according to one of the preceding claims,
**characterized in that**
three sensors (19, 20, 21) are arranged on the tyre inner side (7),
wherein two outer sensors (19, 20) respectively measure the profile wear in the region of the tyre shoulders of the tread (9) and a middle sensor (20) measures the profile wear in the region of the tyre middle of the tread (9).

8. Vehicle tyre according to Claim 7,
**characterized in that**
the three sensors (19, 20, 21) are arranged on the tyre inner side (7) offset from one another in relation to the circumferential direction of the vehicle tyre.

9. Vehicle tyre according to Claim 7 and/or 8,
**characterized in that**
the sensors (2, 19, 20, 21) are connected to a tyre module (13), arranged on the tyre inner side (7), for detecting tyre properties.

## Revendications

1. Pneumatique de véhicule (1) comprenant une bande de roulement (19) pourvue de blocs de structure, un pli de carcasse, une ceinture de pneumatique, un côté intérieur (7) du pneumatique et des flancs, un capteur de pneumatique (2) destiné à mesurer les propriétés du pneumatique étant disposé dans le pneumatique de véhicule,
au moins un capteur (2) destiné à déterminer des déformations de matériau étant disposé au niveau d'un composant de pneumatique (7) au-dessous de la bande de roulement (9),
**caractérisé en ce que**
le capteur (2) comprend au moins deux couches de matériau (10, 12), les couches de matériau inférieure et supérieure (10, 12) comprenant chacune une bande de mesure de déformation destinée à mesurer des déformations de matériau au niveau de la bande de roulement (9),
une usure de structure irrégulière (9) étant détectée avec le capteur (2) et par mesure de déformations de matériau.

2. Pneumatique de véhicule selon la revendication précédente,
**caractérisé en ce que**
les bandes de mesure de déformation des couches de matériau inférieure et supérieure (10, 12) comprennent un matériau caoutchouteux conducteur,
le matériau caoutchouteux conducteur présentant une forte dépendance de la conductivité électrique vis-à-vis de la déformation de matériau.

3. Pneumatique de véhicule selon l'une des revendications précédentes, **caractérisé en ce que**
une couche de matériau médiane 11 est disposée entre les couches de matériau supérieure et inférieure (10, 11), la couche de matériau médiane (11) du capteur étant en un matériau qui est plus dur d'au moins 20 % que les couches de matériau supérieure et inférieure (10, 12) du capteur (2).

4. Pneumatique de véhicule selon la revendication 3,
**caractérisé en ce que**
la couche de matériau médiane (11) du capteur (2) est en une matière synthétique.

5. Pneumatique de véhicule selon l'une des revendications précédentes, **caractérisé en ce que**
le capteur (2) est disposé sur le côté intérieur (7) du pneumatique.

6. Pneumatique de véhicule selon l'une des revendications précédentes, **caractérisé en ce que**
le capteur (2) s'étend sur le côté intérieur (7) du pneumatique depuis un épaulement de pneumatique à l'épaulement de pneumatique opposé.

7. Pneumatique de véhicule selon l'une des revendications précédentes, **caractérisé en ce que**
trois capteurs (19, 20, 21) sont disposés sur le côté intérieur (7) du pneumatique, deux capteurs extérieurs (19, 20) mesurant chacun l'usure de structure au niveau des épaulements de pneumatique de la bande de roulement (9) et un capteur médian (20) mesurant l'usure de structure au niveau du milieu de la bande de roulement (9) du pneumatique.

8. Pneumatique de véhicule selon la revendication 7,
**caractérisé en ce que**
les trois capteurs (19, 20, 21) sont disposés sur le côté intérieur (7) du pneumatique en étant décalés l'un de l'autre par rapport à la direction circonférentielle du pneumatique de véhicule.

9. Pneumatique de véhicule selon la revendication 7 et/ou 8,
**caractérisé en ce que**
les capteurs (2, 19, 20, 21) sont reliés à un module de pneumatique (13) disposé sur le côté intérieur (7) du pneumatique et destiné à détecter les propriétés du pneumatique.
